# EUROPÄISCHE PATENTSCHRIFT

(11) **EP 3 671 506 B1**
(45) Veröffentlichungstag und Bekanntmachung des Hinweises auf die Patenterteilung: **06.10.2021**
(21) Anmeldenummer: 20151096.3
(22) Anmeldetag: 15.03.2010
(51) Int. Cl.: G06F 21/34, G06Q 20/34

(54) **CHIPKARTE, COMPUTERSYSTEM, VERFAHREN ZUR AKTIVIERUNG EINER CHIPKARTE UND VERFAHREN ZUR PERSONALISIERUNG EINER CHIPKARTE**
CHIP CARD, COMPUTER SYSTEM, METHOD FOR ACTIVATING A CHIP CARD AND METHOD FOR PERSONALISING A CHIP CARD
CARTE À PUCE, SYSTÈME INFORMATIQUE, PROCÉDÉ D'ACTIVATION D'UNE CARTE À PUCE ET PROCÉDÉ DE PERSONNALISATION D'UNE CARTE À PUCE

(30) Priorität: 25.03.2009 DE 102009001827
(43) Veröffentlichungstag der Anmeldung: 24.06.2020
(62) Teilanmeldung aus: 10156478.9
(73) Patentinhaber: Bundesdruckerei GmbH, 10969 Berlin (DE)
(72) Erfinder: WIRTH, Dr. Klaus-Dieter, 12683 Berlin (DE)
(74) Vertreter: Richardt Patentanwälte PartG mbB

(56) Entgegenhaltungen:
- WO-A1-03/021542
- WO-A2-99/33033
- DE-T2- 69 829 642
- FR-A1- 2 747 815
- ITU-T: "ITU-T Rec. X.509, Information technology - Open Systems Interconnection - The Directory: Public-key and attribute certificate frameworks", ITU-T X-SERIES RECOMMENDATIONS. DATA NETWORKS, OPEN SYSTEM COMMUNICATIONS AND SECURITY,, Nr. X.509, 1. August 2005 (2005-08-01), XP007913144,

## Beschreibung

Die Erfindung betrifft eine Chipkarte, ein Computersystem, ein Verfahren zur Aktivierung einer Chipkarte sowie ein entsprechendes Computerprogrammprodukt und ein Verfahren zur Personalisierung einer Chipkarte.

Die vorliegende Patentanmeldung ist eine Teilanmeldung zur Stammanmeldung EP 10 156 478.9.

Für die Freischaltung einer Chipkarten-Funktion kann eine zuvorige Benutzeridentifizierung gegenüber der Chipkarte erforderlich sein, wie es aus dem Stand der Technik an sich bekannt ist. Die häufigste Benutzeridentifizierung ist die Eingabe einer geheimen Kennung, welche im Allgemeinen als PIN (Personal Identification Number) bezeichnet wird.

Zur Benutzeridentifizierung wird die PIN von dem Benutzer auf der Tastatur eines Chipkarten-Terminals oder eines Computers, an den ein Chipkarten-Leser angeschlossen ist, eingegeben, und dann zu der Chipkarte gesendet. Diese vergleicht die eingegebene PIN mit der gespeicherten PIN und teilt dann das Ergebnis dem Terminal bzw. dem Computer durch Ausgabe eines entsprechenden Signals mit.

Für die sichere Übermittlung einer Chipkarte von dem Herausgeber der Chipkarte an den berechtigten Nutzer ist die Verwendung einer sogenannten Transport-PIN an sich bekannt. Die Chipkarte befindet sich bei der Auslieferung in ihrem Erstbenutzungsstatus, d.h. einem Status, der angibt, dass die Chipkarte nach der Auslieferung nicht benutzt worden ist. Auf der Chipkarte ist ferner die Transport-PIN gespeichert. Mit getrennter Post erhält der Nutzer die Chipkarte und den PIN-Brief, und zwar mit zeitlichem Versatz.

Zur Aktivierung der Chipkarte muss der Nutzer die Transport-PIN in die Chipkarte eingeben. Wenn die eingegebene Transport-PIN mit der in der Chipkarte gespeicherten Transport-PIN übereinstimmt, so muss der Nutzer daraufhin eine von ihm gewählte PIN eingeben, die im Weiteren für die Freischaltung der Chipkarte bzw. einer bestimmten Chipkartenfunktion verwendet wird. Durch die Eingabe dieser vom Nutzer gewählten PIN erfolgt der Übergang von dem Erstbenutzungsstatus in den Benutzt-Status, d.h. die Aktivierung der Chipkarte.

Die WO 03/021542 beschreibt ein Verfahren zum Einlesen von Initialisierungsdaten in eine Chipkarte, wobei die Chipkarte einen verschlüsselten Authentisierungswert empfängt und diesen entschlüsselt, um zumindest einen Freigabeschlüssel zu erhalten. Der Freigabeschlüssel wird auf Übereinstimmung mit einem auf der Chipkarte gespeicherten Freigabeschlüssel überprüft. Falls eine Übereinstimmung vorliegt, werden die Initialisierungsdaten empfangen und in einen nichtflüchtigen Speicher der Chipkarte eingeschrieben.

Der ITU Standard "ITU-T Rec. X.509, Information technology - Open Systems Interconnection - The Directory: Public-key and attribute certificate frameworks", ITU-T X-SERIES: DATA NETWORKS, OPEN COMMUNICATIONS AND SECURITY, Nr. X.509, 1. August 2005, beschreibt Rahmenbedingungen für Public-Key-Zertifikate und Attribut-Zertifikate.

Die WO 99/33033 A2 beschreibt eine sichere Aktivierung Wertkarten an einem Verteilungspunkt unter Verwendung eines tragbaren sicheren Aktivierungsanwendungsmoduls (ASAM) innerhalb des Kartenausgabeautomaten, um jede Karte zu aktivieren. Jede Karte verfügt über einen Standardbenutzermodus und einen Sicherheitsbenutzermodus. Im Standardbenutzermodus ist die Karte aktiviert und einsatzbereit. Im Sicherheitsbenutzermodus ist die Karte nicht aktiv und kann nicht für einen Kauf verwendet werden. Ein Aussteller liefert einen Ausstelleraktivierungsschlüssel an einen Kartenlieferanten, der einen Sicherheitscode erzeugt, der auf einer gespeicherten Wertkarte gespeichert ist. Karten werden dem Aussteller im Sicherheitsbenutzermodus zugeführt und in einem Ausgabeautomaten gespeichert. Der Ausstelleraktivierungsschlüssel wird ebenfalls an den Ausgabeautomaten weitergeleitet und auf dem ASAM gespeichert. Beim Kauf durch einen Kunden wird der Ausstelleraktivierungsschlüssel in der Maschine vom ASAM verwendet, um den Sicherheitscode zu reproduzieren und eine Karte zu aktivieren.

Der Erfindung liegt demgegenüber die Aufgabe zugrunde, eine verbesserte Chipkarte, ein Computersystem, ein Verfahren zur Aktivierung einer Chipkarte und ein Computerprogrammprodukt zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird eine Chipkarte mit einem elektronischen Speicher geschaffen, in dem neben einer Transport-PIN ein Chiffrat gespeichert ist. Die Chipkarte hat Mittel zur Überführung von einem Erstbenutzungsstatus in einen Benutzt-Status, wobei die Mittel zur Überführung so ausgebildet sind, dass die Überführung von dem Erstbenutzungsstatus in den Benutzt-Status nur dann erfolgt, wenn das Chiffrat und die Transport-PIN übereinstimmen.

Unter einer "Chipkarte" wird hier jedes Dokument verstanden, welches einen Chip, d.h. eine integrierte elektronische Schaltung, beinhaltet, wobei das Dokument zum Beispiel Kunststoff- und/oder Papier-basiert sein kann. Bei der Chipkarte kann es sich um ein Wert- oder Sicherheitsdokument, wie zum Beispiel um ein ID-Dokument, d.h. ein Ausweisdokument, wie zum Beispiel einen Personalausweis, Reisepass, Führerschein, Fahrzeugbrief, Fahrzeugschein oder Firmenausweis, oder ein Zahlungsmittel, wie zum Beispiel eine Banknote, eine Kreditkarte oder einen sonstigen Berechtigungsnachweis, wie zum Beispiel eine Eintrittskarte, einen Frachtbrief, ein Visum oder dergleichen, handeln. Unter einer Chipkarte wird erfindungsgemäß auch ein Dokument verstanden, welches buchartig ausgebildet ist, wie dies zum Beispiel bei einem Reisepass der Fall ist. Unter einer Chipkarte wird erfindungsgemäß auch ein sogenanntes Funketikett verstanden, welches auch als RFID-Tag oder RFID-Label bezeichnet wird. Unter einem Chip wird erfindungsgemäß auch eine integrierte elektronische Schaltung verstanden, die ganz oder teilweise drucktechnisch aufgebracht ist, wie z.B. mittels leitfähiger Tinte. Die Übertragung der Signale und Daten und ggf. auch der Stromversorgung der Chipkarte können auf kontaktbehaftete als auch kontaktlose (berührungslose) Art mittels elektromagnetischer Wellen erfolgen, z.B. so wie dies derzeit für Chipkarten Stand der Technik ist.

Unter einem "Erstbenutzungsstatus" wird hier ein erster Status der Chipkarte verstanden, wonach die Chipkarte nicht von einem hierzu nicht autorisierten Dritten verwendet worden ist. Unter einem "Benutztstatus" wird hier ein zweiter Status der Chipkarte verstanden, wonach die Chipkarte in Benutzung genommen, d.h. aktiviert, worden ist, beispielsweise indem eine PIN von dem Benutzer gewählt und in die Chipkarte eingegeben worden ist.

Nach einer Ausführungsform der Erfindung hat die Chipkarte ein Speicherregister zur Speicherung eines Wertes, der angibt, ob sich die Chipkarte in dem Erstbenutzungsstatus oder in dem Benutztstatus befindet.

Nach einer Ausführungsform der Erfindung werden die Mittel zur Überführung der Chipkarte von dem Erstbenutzungsstatus in den Benutzt-Status durch Programminstruktionen realisiert, welche zur Ausführung durch einen Prozessor der Chipkarte vorgesehen sind. Die Programminstruktionen können zum Beispiel Teil eines Betriebssystems der Chipkarte sein. Die Mittel zur Überführung der Chipkarte von dem Erstbenutzungsstatus in den Benutzt-Status können zumindest teilweise schaltungstechnisch realisiert sein.

Durch Ausführung der Programm instruktionen durch den Prozessor der Chipkarte kann auf das Speicherregister zugegriffen werden, um den Status der Chipkarte zu ermitteln und um den Status der Chipkarte von dem Erstbenutzungsstatus in den Benutzt-Status zu überführen, wenn die hierfür vorgegebenen Bedingungen erfüllt sind. Eine notwendige Bedingung für die Überführung der Chipkarte von dem Erstbenutzungsstatus in den Benutzt-Status, die von den Mitteln zur Überführung überprüft wird, ist, dass das in der Chipkarte gespeicherte Chiffrat mit der ebenfalls in der Chipkarte gespeicherten Transport-PIN übereinstimmt.

Nach einer Ausführungsform der Erfindung wird der Status implizit durch eine spezifische Wertebelegung in einem Speicherbereich der Chipkarte angegeben. Alternativ oder zusätzlich zu dem Speicherregister kann der Status beispielsweise dadurch gegeben sein, dass das Chiffrat beim Übergang von dem Erstbenutzungsstatus in den Benutzt-Status durch andere Daten, wie z.B. ein ungültiges Chiffrat ersetzt wird. Die Prüfung, ob der Erstbenutzungsstatus oder der Benutzt-Status vorliegt, erfolgt dann so, dass durch den Prozessor der Chipkarte geprüft wird, ob das in der Chipkarte gespeicherte Chiffrat mit der Transport-PIN übereinstimmt. Hierdurch ist ein besonders hohes Maß an Sicherheit zum Schutz gegen Manipulationen bezüglich der Überprüfung des Status gegeben.

Nach Ausführungsformen der Erfindung wird die von den Mitteln zur Überführung implementierte Erstbenutzerfunktion der Chipkarte so ausgebildet, dass eine Überführung von dem Erstbenutzungsstatus in den Benutzt-Status nur dann erfolgen kann, wenn das Chiffrat und die Transport-PIN übereinstimmen.

Ausführungsformen der Erfindung sind besonders vorteilhaft, da die Versendung des sonst üblichen PIN-Briefes zur Übermittlung der Transport-PIN an den autorisierten Nutzer entfallen kann. Dies reduziert den logistischen Aufwand für die Übermittlung der Chipkarten erheblich; insbesondere entfallen Reklamationen der Nutzer wegen eines Verlusts von PIN-Briefen. Ein weiterer besonderer Vorteil ist, dass der Nutzer die Chipkarte sofort nach deren Erhalt aktivieren kann, da der Nutzer für die Aktivierung der Chipkarte nicht auf den Erhalt eines PIN-Briefes warten muss. Von weiterem besonderem Vorteil ist ferner, dass die Implementierung von Ausführungsformen der Erfindung mit geringem technischem Aufwand möglich ist.

Nach einer Ausführungsform der Erfindung handelt es sich bei dem Chiffrat, welches auf der Chipkarte gespeichert ist, um die mit einem symmetrischen oder asymmetrischen Schlüssel verschlüsselte Transport-PIN. Beispielsweise wird ein symmetrischer Schlüssel aus einem Passwort abgeleitet oder es wird ein auf einer weiteren Chipkarte, USB Stick oder einem Computer des Nutzers gespeicherter symmetrischer Schlüssel für die Verschlüsselung verwendet. Es kann auch ein asymmetrisches Schlüsselpaar verwendet werden, wobei der öffentliche Schlüssel des Schlüsselpaars für die Verschlüsselung der Transport PIN verwendet wird.

Nach Ausführungsformen der Erfindung erfolgt die Entschlüsselung des Chiffrats zur Überprüfung auf Übereinstimmung mit der Transport-PIN beispielsweise durch ein externes Computersystem, welches mit der Chipkarte über ein Lesegerät kommunizieren kann. Die Chipkarte kann hierzu Mittel zur Übertragung des Chiffrats und Mittel zum Empfang des entschlüsselten Chiffrats aufweisen. Die Chipkarte hat ferner Mittel zur Prüfung der Übereinstimmung des entschlüsselten Chiffrats mit der Transport-PIN.

Nach einer Ausführungsform der Erfindung hat die Chipkarte eine Schnittstelle zur externen Kommunikation, beispielsweise mit einem Computersystem. Die Transport-PIN ist in einem geschützten Speicherbereich der Chipkarte gespeichert, auf den ein Zugriff über die Schnittstelle nicht möglich ist. Auf den geschützten Speicherbereich kann also nur der Prozessor der Chipkarte zugreifen. Das Chiffrat hingegen ist in einem nicht geschützten Speicherbereich gespeichert, auf den ein Zugriff über die Schnittstelle möglich ist, sodass zum Beispiel ein externes Computersystem über ein Lesegerät das Chiffrat aus der Chipkarte auslesen kann. Das externe Computersystem kann das aus der Chipkarte ausgelesene Chiffrat entschlüsseln und das Ergebnis der Entschlüsselung an die Chipkarte übertragen, die daraufhin das entschlüsselte Chiffrat mit der Transport-PIN auf Übereinstimmung prüft. Eine solche Ausführungsform ist besonders vorteilhaft, da der chipkartenseitige Implementierungsaufwand extrem gering ist.

Nach weiteren Ausführungsformen der Erfindung erfolgt die Überprüfung der Übereinstimmung des Chiffrats mit der Transport-PIN durch Entschlüsselung des Chiffrats auf der Chipkarte. Hierzu hat die Chipkarte Mittel zum Empfang von Daten, zum Beispiel von dem Computersystem, und Mittel zur Entschlüsselung des Chiffrats mit Hilfe dieser Daten. Bei den Daten kann es sich zum Beispiel um einen symmetrischen Schlüssel oder um ein Passwort handeln. Im letzteren Fall verfügt die Chipkarte über Mittel zur Ableitung eines symmetrischen Schlüssels aus dem Passwort, um mit Hilfe dieses aus dem Passwort abgeleiteten symmetrischen Schlüssels das Chiffrat zu entschlüsseln.

Nach einer Ausführungsform der Erfindung erfolgt die Überprüfung der Übereinstimmung des Chiffrats und der Transport-PIN, indem die Transport-PIN durch die Chipkarte verschlüsselt wird und das Resultat der Verschlüsselung der Transport-PIN mit dem Chiffrat auf Übereinstimmung geprüft wird. Die Chipkarte verfügt dann über Mittel zum Empfang der Daten und Mittel zur Verschlüsselung der Transport-PIN mit Hilfe der Daten, wobei es sich bei den Daten wiederum um einen symmetrischen Schlüssel oder ein Passwort handeln kann.

Nach einer Ausführungsform der Erfindung sind sowohl das Chiffrat als auch die Transport-PIN in einem geschützten Speicherbereich der Chipkarte gespeichert, auf den ein Zugriff über die Schnittstelle nicht möglich ist. Einzig der Prozessor der Chipkarte kann also auf diesen geschützten Speicherbereich, in dem das Chiffrat und die Transport-PIN gespeichert sind, zugreifen. Da die Entschlüsselung des Chiffrats bzw. die Verschlüsselung der Transport-PIN durch die Chipkarte selbst erfolgt und ein externer Zugriff auf die Transport-PIN und das Chiffrat nicht möglich ist, sind solche Ausführungsformen besonders vorteilhaft, da ein sogenannter Brute-Force- Angriff zur Entschlüsselung des Chiffrats oder zur Verschlüsselung der Transport-PIN nicht möglich ist.

Nach Ausführungsformen der Erfindung hat die Chipkarte Zählermittel, wobei die Zählermittel zum Zählen einer Anzahl von Fehleingaben der Daten ausgebildet sind. Werden also Daten von der Chipkarte empfangen, mit deren Hilfe das Chiffrat entschlüsselt bzw. die Transport-PIN verschlüsselt werden soll, und schlägt die anschließende Überprüfung auf Übereinstimmung des Chiffrats und der Transport-PIN fehl, so bedeutet dies, dass die Daten fehlerhaft sind, beispielsweise also das Passwort nicht korrekt eingegeben worden ist. Die Zählermittel werden daraufhin zum Beispiel inkrementiert.

Die Chipkarte hat ferner Mittel zur Überführung der Chipkarte in einem gesperrten Zustand, wenn eine maximale Anzahl von Fehleingaben erreicht wird, d.h. wenn der Zählerstand der Zählermittel einen Extremwert, wie z.B. einen maximalen Wert erreicht hat. Vorzugsweise ist der Übergang in diesen gesperrten Zustand irreversibel, kann also auch nicht durch die Eingabe einer PUK oder dergleichen rückgängig gemacht werden. Hierdurch wird ein besonders hohes Maß an Sicherheit gegen unautorisierte Benutzungen der Chipkarte geschaffen.

Nach Ausführungsformen der Erfindung beinhalten die Mittel zur Überführung der Chipkarte von einem Erstbenutzungsstatus in einen Benutzt-Status, einen Prozessor, der durch Instruktionen aus einem Programmspeicher gesteuert wird, wobei durch die Instruktionen die Bedingungen für die Überführung der Chipkarte von dem Erstbenutzungsstatus in den Benutzt-Status definiert sind.

Nach einer Ausführungsform der Erfindung werden die Mittel zur Übertragung des Chiffrats und die Mittel zum Empfangen des entschlüsselten Chiffrats auf der physikalischen Ebene durch eine Schnittstelle der Chipkarte implementiert, über die die Chipkarte zum Beispiel mit einem externen Computer, d.h. beispielsweise einem sogenannten Host, Signale austauschen kann. Ferner können die Mittel zur Übertragung bzw. die Mittel zum Empfang einen Prozessor beinhalten, der durch Instruktionen aus einem Programmspeicher gesteuert wird, um die Übertragung des Chiffrats bzw. den Empfang des entschlüsselten Chiffrats durch die Schnittstelle zu steuern.

Nach einer Ausführungsform der Erfindung beinhalten die Mittel zur Prüfung der Übereinstimmung des entschlüsselten Chiffrats mit der Transport-PIN einen Prozessor, der durch Instruktionen aus einem Programmspeicher gesteuert wird, um die Übereinstimmung des entschlüsselten Chiffrats mit der Transport-PIN zu überprüfen. Dies kann so erfolgen, dass die Identität des entschlüsselten Chiffrats und der Transport-PIN geprüft wird oder die Überführbarkeit des entschlüsselten Chiffrats in die Transport-PIN nach einer vorgegebenen Transformationsvorschrift.

Nach einer Ausführungsform der Erfindung werden die Mittel zum Empfang von Daten auf physikalischer Ebene durch eine Schnittstelle der Chipkarte gebildet, über welcher die Chipkarte zum Beispiel mit einem externen Computersystem Signale austauschen kann. Die Mittel zum Empfang von Daten können ferner einen Prozessor beinhalten, der durch Instruktionen aus einem Programmspeicher gesteuert wird, um die Daten, d.h. beispielsweise einen symmetrischen Schlüssel oder ein Passwort, von dem externen Computer zu empfangen.

Nach einer Ausführungsform der Erfindung beinhalten die Mittel zur Entschlüsselung des Chiffrats mit Hilfe der Daten einen Prozessor, der durch Instruktionen aus einem Programmspeicher gesteuert wird, um das Chiffrat mit Hilfe der Daten zu entschlüsseln, beispielsweise indem das Chiffrat mit Hilfe des symmetrischen Schlüssels entschlüsselt wird.

Nach einer Ausführungsform der Erfindung beinhalten die Mittel zur Prüfung der Übereinstimmung des Chiffrats mit der verschlüsselten Transport-PIN einen Prozessor, der durch Instruktionen aus einem Programmspeicher gesteuert wird, um das Chiffrat mit der verschlüsselten Transport-PIN auf Übereinstimmung zu prüfen. Dies kann so erfolgen, dass die Identität des Chiffrats und der verschlüsselten Transport-PIN geprüft wird oder die Überführbarkeit des Chiffrats oder Transport-PIN ineinander mit Hilfe einer vordefinierten Transformationsvorschrift.

Nach einer Ausführungsform der Erfindung beinhalten die Zählermittel einen Prozessor, der durch Instruktionen aus einem Programmspeicher gesteuert wird, um die Anzahl von Fehleingaben der Daten zu zählen. Die Zählermittel könnten auch schaltungstechnisch realisiert sein.

Nach einer Ausführungsform der Erfindung beinhalten die Mittel zur Überführung der Chipkarte in einen gesperrten Zustand einen Prozessor, der durch Instruktionen aus einem Programmspeicher gesteuert wird, um die Überführung der Chipkarte in den gesperrten Zustand dann vorzunehmen, wenn die maximale Anzahl von Fehleingaben ausweislich des Zählerstands der Zählermittel erreicht wird.

Nach Ausführungsformen der Erfindung beinhaltet die Chipkarte einen einzigen Prozessor, der zur Ausführung verschiedener Instruktionen dient, um verschiedene Funktionalitäten, beispielsweise also die Mittel zur Überführung, die Mittel zur Übertragung, die Mittel zum Empfangen, die Mittel zur Prüfung der Übereinstimmung, die Mittel zum Empfang und/oder die Mittel zur Entschlüsselung zu realisieren.

In einem weiteren Aspekt betrifft die Erfindung ein Computersystem mit einem Lesegerät zum Zugriff auf eine Ausführungsform einer erfindungsgemäßen Chipkarte.

Nach einer Ausführungsform der Erfindung ist das Computersystem dazu ausgebildet, aus der Chipkarte das Chiffrat auszulesen. Das Computersystem hat ferner Mittel zur Entschlüsselung des Chiffrats und Mittel zur Übertragung des entschlüsselten Chiffrats an die Chipkarte. Das Computersystem kann ferner über Eingabemittel für Daten, wie zum Beispiel einen symmetrischen Schlüssel, oder ein Passwort verfügen. Das Computersystem kann Mittel zur Ableitung eines symmetrischen Schlüssels aus dem Passwort aufweisen. Das Computersystem hat Mittel zur Entschlüsselung des von der Chipkarte ausgelesenen Chiffrats mit Hilfe der Daten, d.h. mit dem symmetrischen Schlüssel oder mit dem aus dem Passwort abgeleiteten symmetrischen Schlüssel. Das Ergebnis der Entschlüsselung des Chiffrats wird dann von dem Computersystem an die Chipkarte zurückgegeben, die das entschlüsselte Chiffrat auf Übereinstimmung mit der Transport-PIN prüfen kann.

Nach einer Ausführungsform der Erfindung dient eine weitere Chipkarte zur Entschlüsselung des Chiffrats. Auf der weiteren Chipkarte ist ein asymmetrisches Schlüsselpaar abgespeichert, insbesondere ein privater Schlüssel, der dem Nutzer zugeordnet ist. Die weitere Chipkarte wird mit dem Computersystem gekoppelt, indem die Chipkarte mit dem Chiffrat aus dem Lesegerät entfernt wird und die weitere Chipkarte in das Lesegerät eingeführt wird. Alternativ können zwei Lesegeräte an das Computersystem angeschlossen sein, sodass die erfindungsgemäße Chipkarte, auf der das Chiffrat gespeichert ist, nicht aus dem Lesegerät entfernt zu werden braucht. Das Chiffrat wird von dem Computersystem an die weitere Chipkarte übertragen, sodass es dort mit Hilfe des privaten Schlüssels entschlüsselt wird. Das Ergebnis der Entschlüsselung wird von der weiteren Chipkarte an das Computersystem zurückgegeben, und das Computersystem überträgt das entschlüsselte Chiffrat an die erfindungsgemäße Chipkarte.

Nach Ausführungsformen der Erfindung des erfindungsgemäßen Computersystems wird die Entschlüsselung des Chiffrats nicht durch das Computersystem oder die weitere Chipkarte, sondern durch eine Ausführungsform der erfindungsgemäßen Chipkarte, auf der das Chiffrat gespeichert ist, vorgenommen. Das Computersystem verfügt über Mittel zur Eingabe von Daten, wie zum Beispiel eines symmetrischen Schlüssels oder eines Passworts. Der symmetrische Schlüssel wird von dem Computersystem an die Chipkarte übertragen, sodass die Chipkarte mit Hilfe des symmetrischen Schlüssels das auf der Chipkarte gespeicherte Zertifikat entschlüsseln kann.

Bei Ausführungsformen, bei denen ein Passwort verwendet wird, wird entweder durch das Computersystem aus dem Passwort der symmetrische Schlüssel abgeleitet und dann zu der Chipkarte übertragen, oder es wird das Passwort an die Chipkarte übertragen und von der Chipkarte wird der symmetrische Schlüssel aus dem Passwort abgeleitet.

Nach Ausführungsformen der Erfindung haben die Mittel zum Auslesen des Chiffrats aus der Chipkarte, die Mittel zur Entschlüsselung des Chiffrats, die Mittel zur Übertragung des entschlüsselten Chiffrats, die Eingabemittel, die Mittel zur Ableitung eines Schlüssels, die Mittel zur Entschlüsselung des Chiffrats, die Mittel zur Eingabe der Daten jeweils einen oder mehrere Prozessoren. Der zumindest eine Prozessor wird durch Instruktionen aus einem Programmspeicher gesteuert, um diese Funktionalitäten zu realisieren.

Ausführungsformen der Erfindung sind besonders vorteilhaft, da der Nutzer die Chipkarte sofort nach deren Erhalt aktivieren kann. Der Nutzer muss also nicht erst abwarten, bis er neben der Chipkarte auch den PIN-Brief per Post erhalten hat.

Ausführungsformen der Erfindung sind besonders vorteilhaft, da das Dateisystem der Chipkarte nicht geändert werden muss. Beispielsweise ist eine bestimmte Datei des Dateisystems standardmäßig dafür vorgesehen, um die verschlüsselte Transport-PIN, d.h. das Chiffrat, zu speichern. Auf diese vordefinierte Datei kann dann ein externer Computer zugreifen, um das Chiffrat auszulesen.

In einem weiteren Aspekt betrifft die Erfindung ein Verfahren zur Aktivierung einer Chipkarte mit folgenden Schritten: Prüfung des Chiffrats und der Transport-PIN auf Übereinstimmung durch die Chipkarte, Eingabe einer von einem Nutzer gewählten PIN in die Chipkarte, Übergang von einem Erstbenutzungsstatus in einen Benutzt-Status zur Aktivierung der Chipkarte, wenn die Prüfung eine Übereinstimmung zwischen dem Chiffrat und der Transport-PIN ergeben hat.

Im Weiteren werden Ausführungsformen der Erfindung mit Bezugnahme auf die Zeichnungen näher erläutert. Es zeigen:
- Figur 1: ein Blockdiagramm einer Ausführungsform einer erfindungsgemäßen Chipkarte und eines erfindungsgemäßen Computersystems,
- Figur 2: ein Flussdiagramm einer Ausführungsform eines erfindungsgemäßen Verfahrens,
- Figur 3: ein Blockdiagramm einer weiteren Ausführungsform einer erfindungsgemäßen Chipkarte und eines erfindungsgemäßen Computersystems,
- Figur 4: ein Flussdiagramm einer weiteren Ausführungsform eines erfindungsgemäßen Verfahrens,
- Figur 5: ein Flussdiagramm einer Ausführungsform eines erfindungsgemäßen Verfahrens zur Personalisierung einer Chipkarte.

Elemente der nachfolgenden Ausführungsformen, die einander entsprechen, sind jeweils mit denselben Bezugszeichen gekennzeichnet.

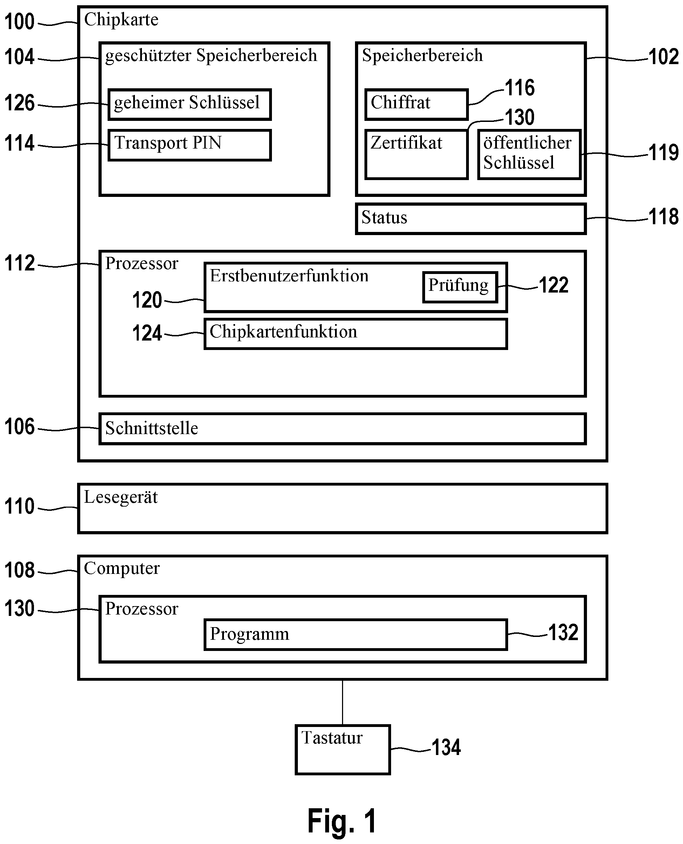

Die Figur 1 zeigt eine Chipkarte 100, die zumindest einen elektronischen Speicher mit einem Speicherbereich 102 und einem geschützten Speicherbereich 104 aufweist. Die Chipkarte 100 hat eine Schnittstelle 106 zum Zugriff eines Computers 108 über ein Lesegerät 110 auf den Speicherbereich 102. Ein Zugriff auf den geschützten Speicherbereich 104 ist dagegen über die Schnittstelle 106 nicht möglich. Nur ein Prozessor 112 der Chipkarte 100 kann auf den geschützten Speicherbereich 104 zugreifen.

In dem geschützten Speicherbereich 104 ist eine Transport-PIN 114 gespeichert. Die Transport-PIN 114 wird beispielsweise anlässlich einer Personalisierung der Chipkarte 100 in den geschützten Speicherbereich 104 eingebracht. Die Transport-PIN 114 wird von dem Herausgeber der Chipkarte geheim gehalten. Die Kenntnis der Transport-PIN 114 ist erforderlich, um die Chipkarte zu aktivieren, d.h. um die Chipkarte aus ihrem Erstbenutzungsstatus in ihren Benutzt-Status zu überführen.

Ein Chiffrat 116 ist in dem Speicherbereich 102 gespeichert. Das Chiffrat 116 wird aus der Transport-PIN 114 gewonnen, indem die Transport-PIN mit einem symmetrischen oder einem asymmetrischen Schlüssel verschlüsselt wird. Dieses Chiffrat 116 wird beispielsweise ebenfalls anlässlich der Personalisierung der Chipkarte 100 in dem Speicherbereich 102 gespeichert.

Die Chipkarte 100 hat ein Register 118, in dem der Status der Chipkarte 100 gespeichert ist. Der Inhalt des Registers 118 kann beispielsweise "0" sein, was bedeutet, dass sich die Chipkarte 100 in ihrem Erstbenutzungsstatus befindet, oder der Wert des Registers 118 kann "1" sein, was bedeutet, dass sich die Chipkarte 100 in deren Benutzt-Status befindet. Bei Auslieferung der Chipkarte 100 ist der Inhalt des Registers 118 also "0".

Nach einer Ausführungsform der Erfindung kann der Status auch implizit durch eine spezifische Wertebelegung in einem anderen Bereich der Chipkarte 100 gegeben sein. Statt durch das Register 118 kann der Status beispielsweise dadurch gegeben sein, dass ein valides Chiffrat 116 im Erstbenutzungsstatus in dem Speicherbereich 102 gespeichert ist. Der Benutzt-Status liegt dann vor, wenn statt des validen Chiffrats 116 ein ungültiges Chiffrat gespeichert wird. Beispielsweise wird also für den Übergang von dem Erstbenutzungsstatus in den Benutzt-Status das validen Chiffrats 116 durch ein ungültiges Chiffrat ersetzt.

Der Prozessor 112 dient zur Ausführung von Programminstruktionen 120, durch die Mittel zur Überführung der Chipkarte von dem Erstbenutzungsstatus in den Benutzt-Status gebildet werden. Hierbei handelt es sich um eine sogenannte Erstbenutzerfunktion. Durch die Programminstruktionen 120 sind die Voraussetzungen für ein Überführen der Chipkarte 100 von dem Erstbenutzungsstatus in den Benutzt-Status definiert.

Insbesondere beinhalten die Programm instruktionen 120 hierzu Programm instruktionen 122 zur Prüfung der Übereinstimmung der Transport-PIN 114 und des Chiffrats 116. Die Programminstruktionen 120 können beispielsweise so ausgebildet sein, dass ein Übergang von dem Erstbenutzungsstatus in den Benutzt-Status dann durch Zugriff auf das Register 118 durchgeführt wird, wenn (i) durch Ausführung der Programminstruktionen 122 festgestellt worden ist, dass die Transport-PIN 114 mit dem Chiffrat 116 übereinstimmt, und dass (ii) durch den Nutzer ein Passwort gewählt und über die Schnittstelle 106 eingegeben worden ist. Wenn die Bedingungen (i) und (ii) erfüllt sind, so wird der Status in dem Statusregister 118 durch die Programminstruktionen 120 auf "1" gesetzt. Die Chipkarte 100 ist damit dann aktiviert und die von dem Nutzer gewählte PIN muss im Weiteren für die Freischaltung der Chipkarte 100 oder einer von deren Chipkartenfunktionen in die Chipkarte 100 eingegeben werden.

Beispielsweise dient der Prozessor 112 zur Ausführung von Programminstruktionen 124, durch die eine Chipkartenfunktion gebildet wird, wie zum Beispiel eine Signaturfunktion zur Generierung einer elektronischen Signatur.

In dem geschützten Speicherbereich 104 ist dann ein geheimer Schlüssel 126 gespeichert und in dem Speicherbereich 102 ist der dazu gehörige öffentliche Schlüssel 128 gespeichert. Ferner kann in dem Speicherbereich 102 ein Zertifikat 130 gespeichert sein.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems, also z.B. den Schlüssel 119, einer Identität, wie z.B. einer Person oder einer Organisation, zuzuordnen. Beispielsweise kann das Zertifikat dem Standard X.509 oder einem anderen Standard entsprechen.

Bei dem Computer 108 kann es sich um einen Personalcomputer (PC) handeln. Der Computer 108 hat zumindest einen Prozessor 130 zur Ausführung von Programminstruktionen 132. Bei dem Programm 132 kann es sich beispielsweise um ein Treiberprogramm zum Zugriff auf die Chipkarte 100, ein Chipkarten-Verwaltungsprogramm oder ein anderes Anwendungsprogramm handeln. Das Programm 132 kann auch einen integralen Bestandteil des Betriebssystems des Computers 108 bilden. An den Computer 108 kann eine Tastatur 134 angeschlossen sein. Für die Aktivierung der Chipkarte 100 kann bei dieser Ausführungsform wie folgt vorgegangen werden:

Die Chipkarte 100 wird in das Lesegerät 110 eingeführt. Die Programminstruktionen 132 werden gestartet. Die Chipkarte 100 signalisiert gegenüber dem Computer 108, dass sie sich in ihrem Erstbenutzungsstatus befindet. Daraufhin wird der Nutzer über eine Schnittstelle des Computers 108 dazu aufgefordert, einen Schlüssel einzugeben. Bei diesem Schlüssel kann es sich um den symmetrischen Schlüssel handeln, mit dem die Transport-PIN 114 verschlüsselt worden ist. Dieser symmetrische Schlüssel kann von dem Nutzer mit dem Herausgeber der Chipkarte 100 anlässlich der Beantragung der Chipkarte 100 vereinbart worden sein.

Durch Ausführung der Programminstruktionen 132 wird über die Schnittstelle 106 auf das Chiffrat 116 zugegriffen und dieses wird aus dem Speicherbereich 102 zu dem Computer 104 übertragen. Durch Ausführung der Programminstruktionen 132 wird das Chiffrat 116 dann mit Hilfe des von dem Nutzer eingegebenen Schlüssels entschlüsselt und das Resultat der Entschlüsselung wird von dem Computer 108 über das Lesegerät 110 an die Schnittstelle 106 übertragen. Durch Ausführung der Programminstruktionen 122 wird dann geprüft, ob das von dem Computer 108 empfangene Resultat der Entschlüsselung des Chiffrats 116 mit der in dem geschützten Speicherbereich 104 gespeicherten Transport-PIN 114 übereinstimmt. Wenn diese Bedingung erfüllt ist, und die Chipkarte 100 über die Schnittstelle 106 ein von dem Nutzer gewähltes Passwort empfängt, so wird durch Ausführung der Programminstruktionen 120 auf das Register 118 zugegriffen, um dieses auf den Benutzt-Status "1" zu setzen. Im Weiteren kann dann die Chipkartenfunktion 124 mit dem von dem Nutzer gewählten Passwort freigeschaltet werden.

Nach einer weiteren Ausführungsform der Erfindung kann von dem Nutzer anstelle eines Schlüssels ein Passwort, zum Beispiel über die Tastatur 134, in den Computer 108 eingegeben werden. Dieses Passwort wird durch Ausführung der Programminstruktionen 132 an die Chipkarte 100 übertragen. Zum Beispiel durch Ausführung der Programminstruktionen 120 wird aus dem Passwort ein Schlüssel abgeleitet. Bei richtiger Eingabe des Passworts handelt es sich bei dem so gewonnenen Schlüssel um den symmetrischen Schlüssel, der für die Generierung des Chiffrats 116 verwendet worden ist. Durch Ausführung der Programminstruktionen 122 wird das Chiffrat 116 dann mit Hilfe dieses Schlüssels entschlüsselt und das Resultat der Entschlüsselung wird auf Übereinstimmung mit der Transport-PIN 114 geprüft.

Die Ableitung des symmetrischen Schlüssels aus dem Passwort kann auch durch Ausführung der Programminstruktionen 132 auf Seiten des Computers 108 implementiert sein. Der Computer 108 überträgt dann anstelle des Passworts den daraus generierten symmetrischen Schlüssel an die Chipkarte 100.

Die Programminstruktionen 122 können auch so ausgebildet sein, dass mit Hilfe des symmetrischen Schlüssels nicht das Chiffrat 116 entschlüsselt wird, sondern die Transport-PIN 114 verschlüsselt wird, um das Resultat der Verschlüsselung auf Übereinstimmung mit dem Chiffrat 116 zu prüfen.

Nach einer weiteren Ausführungsform der Erfindung erfolgt die Entschlüsselung des Chiffrats 116 mit Hilfe eines privaten Schlüssels, der entweder in dem Computer 108 gespeichert ist oder auf einer weiteren Chipkarte, die sich in Besitz des Nutzers befindet. Der dazu gehörige öffentliche Schlüssel ist seitens des Herausgebers der Chipkarte 100 für die Verschlüsselung des Chiffrats 116 verwendet worden.

Wenn der private Schlüssel also beispielsweise auf der weiteren Chipkarte gespeichert ist, so kann wie folgt vorgegangen werden:
Nach Empfang des Chiffrats 116 durch den Computer 108 wird die weitere Chipkarte in das Lesegerät 110 eingeführt. Wenn das Lesegerät 110 nur mit einer Chipkarte kommunizieren kann, wird zuvor die Chipkarte 100 von dem Lesegerät 110 entfernt. Das Chiffrat 116 wird dann von dem Computer 108 über das Lesegerät 110 an die weitere Chipkarte übertragen, wo das Chiffrat 116 mit Hilfe des privaten Schlüssels entschlüsselt wird. Das Ergebnis der Entschlüsselung des Chiffrats 116 durch die weitere Chipkarte wird von der weiteren Chipkarte über das Lesegerät 110 an den Computer 108 kommuniziert. Das Ergebnis der Entschlüsselung wird dann durch Ausführung der Programminstruktionen 132 von dem Computer 108 über das Lesegerät 110 an die Chipkarte 100 übertragen, wo dann die Prüfung durch Ausführung der Programminstruktionen 122 vorgenommen wird.

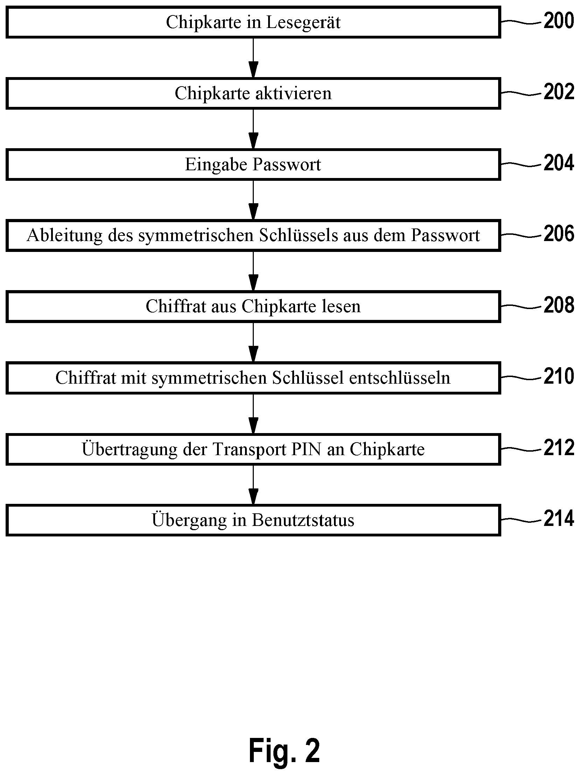

Die Figur 2 zeigt ein Flussdiagramm einer Ausführungsform eines erfindungsgemäßen Verfahrens.

In dem Schritt 200 wird eine Ausführungsform der erfindungsgemäßen Chipkarte, beispielsweise die Chipkarte 100 gemäß der Ausführungsform nach Figur 1, in die Reichweite eines Lesegeräts gebracht. Bei einer kontaktbehafteten Ausführung der Schnittstelle der Chipkarte wird die Chipkarte also beispielsweise in das Lesegerät eingeführt. In dem Schritt 202 wird die Aktivierung der Chipkarte gestartet, beispielsweise durch Start eines Programms auf dem Computer, an den das Lesegerät angeschlossen ist, vergleiche beispielsweise Programm 132 in der Ausführungsform der Figur 1.

Zur Aktivierung der Chipkarte gibt der Benutzer in dem Schritt 204 in den Computer ein Passwort ein. In dem Schritt 206 wird aus diesem Passwort nach einem vordefinierten Ableitungsverfahren ein symmetrischer Schlüssel abgeleitet. In dem Schritt 208 greift der Computer auf die Chipkarte zu, um das Chiffrat aus der Chipkarte auszulesen. Das Chiffrat wird dann in dem Schritt 210 von dem Computer mit dem aus dem Passwort abgeleiteten symmetrischen Schlüssel entschlüsselt. Das Resultat der Entschlüsselung des Chiffrats wird in dem Schritt 212 von dem Computer an die Chipkarte übertragen.

Wenn das in dem Schritt 204 eingegebene Passwort korrekt war, so stimmt das entschlüsselte Chiffrat mit der in der Chipkarte gespeicherten Transport-PIN, vergleiche die Transport-PIN 114 in der Ausführungsform der Figur 1, überein, und die Chipkarte kann anschließend in dem Schritt 214 in den Benutzt-Status übergehen. Zum Übergang in den Benutzt-Status kann es ferner erforderlich sein, dass der Nutzer ein von ihm gewähltes Passwort, zum Beispiel über den Computer, in die Chipkarte eingibt, wobei dieses von dem Nutzer gewählte Passwort dann im Weiteren zur Freischaltung der Chipkarte oder von einer deren Chipkartenfunktionen verwendet werden kann.

Als Alternative zu der Eingabe eines Passworts in dem Schritt 204 kann auch unmittelbar der symmetrische Schlüssel in den Computer eingegeben werden, wobei dann der Schritt 206 entfällt. Die Eingabe des symmetrischen Schlüssels in den Computer 108 kann über einen Datenträger erfolgen, wie zum Beispiel eine weitere Chipkarte, einen USB-Stick oder dergleichen. Der symmetrische Schlüssel kann auch in dem Computer 108 gespeichert sein.

Der Nutzer kann auch über eine weitere Chipkarte verfügen, auf der sein privater Schlüssel gespeichert ist. Die Transport-PIN der erfindungsgemäßen Chipkarte wird bei dieser Ausführungsform mit dem zu dem privaten Schlüssel gehörigen öffentlichen Schlüssel der weiteren Chipkarte des Nutzers verschlüsselt. Zur Entschlüsselung des Chiffrats wird dann so vorgegangen, dass die Schritte 204 und 206 entfallen und stattdessen das Chiffrat nach dem Auslesen aus der Chipkarte (Schritt 208) an die weitere Chipkarte von dem Computer übergeben wird, wobei die weitere Chipkarte das Chiffrat mit Hilfe des privaten Schlüssels entschlüsselt und das entschlüsselte Chiffrat an den Computer zurückgibt. Danach werden wiederum die Schritte 212 und 214 ausgeführt.

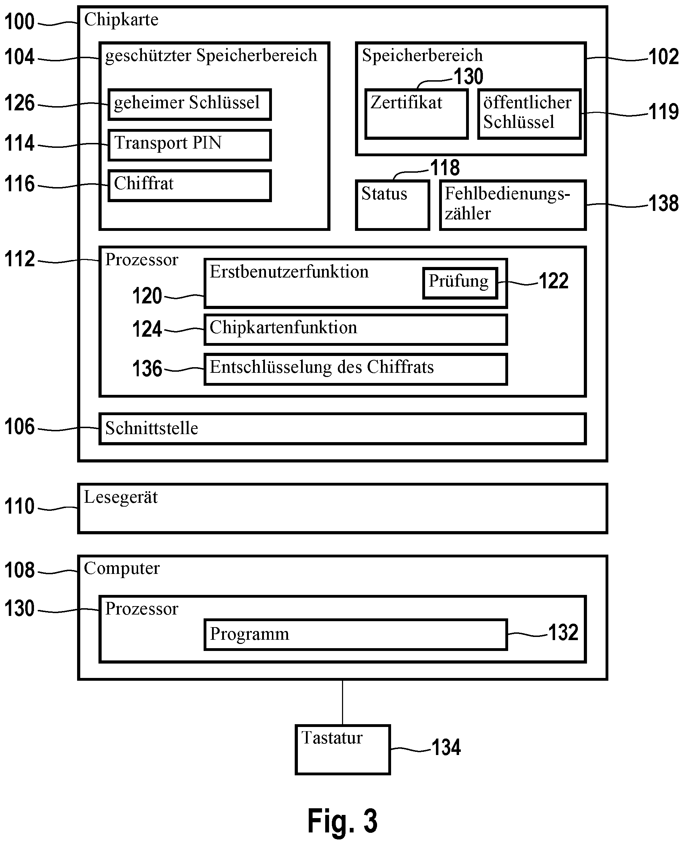

Die Figur 3 zeigt eine weitere Ausführungsform einer erfindungsgemäßen Chipkarte 100 und eines erfindungsgemäßen Computers 108.

Im Unterschied zu der Ausführungsform der Figur 1 ist nicht nur die Transport-PIN 114, sondern auch das Chiffrat 116 in dem geschützten Speicherbereich 104 der Chipkarte 100 gespeichert, sodass also das Chiffrat 116 nicht über die Schnittstelle 106 aus der Chipkarte 100 ausgelesen werden kann.

Im Unterschied zu der Ausführungsform der Figur 1 dient der Prozessor 112 in der Ausführungsform der Figur 3 zur Ausführung von Programminstruktionen 136 zur Entschlüsselung des Chiffrats 116, d.h. das Chiffrat 116 wird durch die Chipkarte 100 selbst entschlüsselt.

Zur Aktivierung der Chipkarte 100 wird bei dieser Ausführungsform beispielsweise wie folgt vorgegangen:
Nachdem die Chipkarte 100 in das Lesegerät 110 eingeführt worden ist, werden die Programminstruktionen 132 gestartet und der Nutzer wird dazu aufgefordert, beispielsweise über die Tastatur 134, sein Passwort einzugeben. Durch Ausführung der Programminstruktionen 132 wird aus dem Passwort ein symmetrischer Schlüssel abgeleitet, der über das Lesegerät 110 an die Chipkarte 100 übertragen wird.

Durch Ausführung der Programm instruktionen 120 greift der Prozessor 112 auf das Chiffrat 116 zu und entschlüsselt das Chiffrat durch Ausführung der Programminstruktionen 136 mit Hilfe des von dem Computer 108 empfangenen symmetrischen Schlüssels.

Durch Ausführung der Programminstruktionen 122 wird dann geprüft, ob das Resultat der Entschlüsselung des Chiffrats 116 mit der Transport-PIN 114 übereinstimmt. Wenn dies der Fall ist, wird durch Ausführung der Programm instruktionen 120 ein Signal generiert und zu dem Computer 108 übertragen, um den Nutzer dazu aufzufordern, über die Tastatur ein von ihm gewähltes Passwort einzugeben. Dieses von dem Nutzer gewählte Passwort wird dann von dem Computer 108 und der Chipkarte 100 übertragen und dort als Referenz gespeichert, sodass es im Weiteren zur Freischaltung der Chipkarte bzw. der Chipkartenfunktion 124 verwendet werden kann. Durch Ausführung der Programminstruktionen 120 wird ferner der Status in dem Register 118 auf den Benutzt-Status "1" gesetzt.

Alternativ wird nicht aus der aus dem Passwort abgeleitete Schlüssel von dem Computer 108 an die Chipkarte 100 übertragen, sondern das Passwort selbst. Die Ableitung des symmetrischen Schlüssels aus dem Passwort erfolgt dann beispielsweise durch Ausführung der Programminstruktionen 136 seitens der Chipkarte 100.

Als Alternative zu der Eingabe des Passworts in den Computer 108 kann ein symmetrischer Schlüssel in den Computer 108 eingegeben werden oder zum Beispiel von einem Datenträger, wie zum Beispiel einer weiteren Chipkarte, einem USB-Stick oder dergleichen, von dem Computer 108 eingelesen werden. Dieser symmetrische Schlüssel wird dann von dem Computer 108 an die Chipkarte 100 übertragen, sodass durch Ausführung der Programminstruktionen 136 das Chiffrat 116 entschlüsselt werden kann.

Nach einer weiteren Ausführungsform der Erfindung erfolgt die Prüfung der Übereinstimmung des Chiffrats 116 und der Transport-PIN 114 nicht durch Entschlüsselung des Chiffrats, sondern durch Verschlüsselung der Transport-PIN 114. Die Programminstruktionen 136 sind dann also für eine Verschlüsselung der Transport-PIN 114 mit Hilfe des von dem Computer 108 empfangenen bzw. aus dem Passwort abgeleiteten symmetrischen Schlüssels ausgebildet. Die Programminstruktionen 122 sind dann so ausgebildet, dass geprüft wird, ob das Resultat der Verschlüsselung der Transport-PIN 114 mit dem Chiffrat 116 übereinstimmt.

Um einen sogenannten Brute-Force-Angriff abzuwehren, kann die Chipkarte 100 einen Fehlbedienungszähler 138 aufweisen. Der Fehlbedienungszähler 138 kann zum Beispiel schaltungstechnisch und/oder als Teil des Betriebssystems der Chipkarte 100 realisiert sein. Beispielsweise steht der Fehlbedienungszähler 138 bei Auslieferung der Chipkarte 100 auf einem initialen Wert von zum Beispiel 3. Jedes Mal, wenn die Prüfung auf Übereinstimmung der Transport-PIN 114 und des Chiffrats 116 durch Ausführung der Programminstruktionen 122 fehlschlägt, so bedeutet dies, dass eine Fehlbedienung vorliegt, dass also das zum Beispiel über die Tastatur 134 eingegebene Passwort von dem Nutzer nicht korrekt eingegeben worden ist. Der Fehlbedienungszähler 138 wird daraufhin dekrementiert. Wenn der Fehlbedienungszähler 138 aufgrund einer wiederholten Fehleingabe des Passworts den Wert "0" erreicht hat, so geht die Chipkarte 100 in einen gesperrten Zustand über. Dieser Übergang kann irreversibel ausgebildet sein, sodass die Chipkarte 100 unbrauchbar wird.

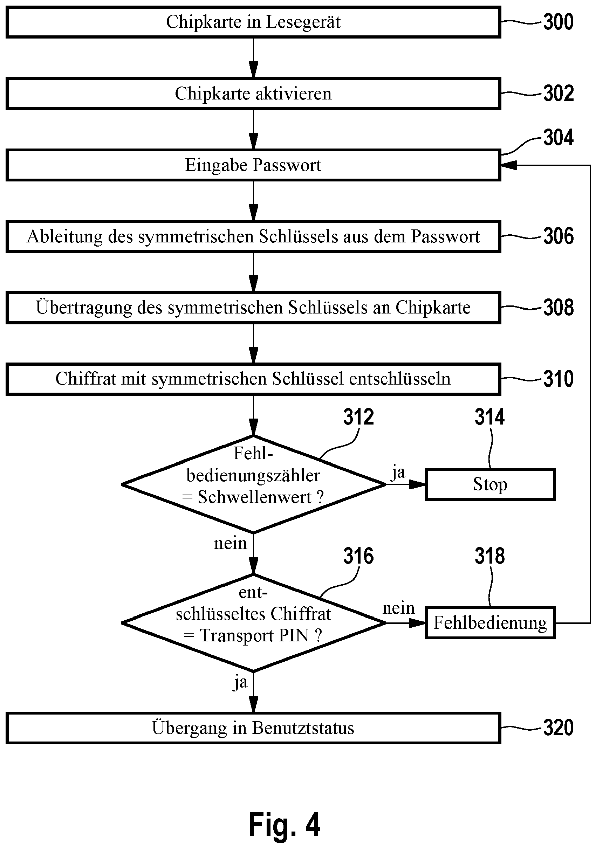

Die Figur 4 zeigt ein entsprechendes Flussdiagramm. Die Schritte 300 bis 306 können so wie die Schritte 200 bis 206 der Ausführungsform gemäß Figur 2 ausgeführt werden. In dem Schritt 308 wird der aus dem Passwort abgeleitete symmetrische Schlüssel von dem Computer an die Chipkarte übertragen, sodass die Chipkarte in dem Schritt 310 das Chiffrat mit Hilfe des symmetrischen Schlüssels entschlüsseln kann. In dem Schritt 312 wird dann geprüft, ob der Fehlbedienungszähler (vgl. Fehlbedienungszähler 138 der Ausführungsform gemäß Figur 3) seinen Schwellwert von zum Beispiel "0" erreicht hat. Wenn dies der Fall ist, wird der Vorgang in dem Schritt 314 abgebrochen, da sich die Karte in ihrem gesperrten Zustand befindet.

Ist das Gegenteil der Fall, so wird in dem Schritt 316 geprüft, ob das entschlüsselte Chiffrat gleich der Transport-PIN ist. Wenn dies nicht zutrifft, wird in dem Schritt 318 der Fehlbedienungszähler dekrementiert und die Ablaufsteuerung geht zu dem Schritt 304 zurück, wo der Nutzer zur erneuten Eingabe des Passworts aufgefordert wird. Ergibt hingegen die Prüfung in dem Schritt 316, dass das entschlüsselte Chiffrat gleich der Transport-PIN ist, so erfolgt in dem Schritt 318 der Übergang in den Benutzt-Status, nachdem der Nutzer eine von ihm gewählte PIN über den Computer in die Chipkarte eingegeben hat.

Statt durch den Computer kann die Ableitung des symmetrischen Schlüssels auch durch die Chipkarte erfolgen. In diesem Fall wird von dem Computer an die Chipkarte nicht der symmetrische Schlüssel, sondern das Passwort übertragen und die Chipkarte leitet aus dem Passwort den symmetrischen Schlüssel ab.

Der Fehlbedienungszähler kann auch so implementiert sein, dass er mit jeder Fehlbedienung inkrementiert wird, bis er einen Maximalwert erreicht hat.

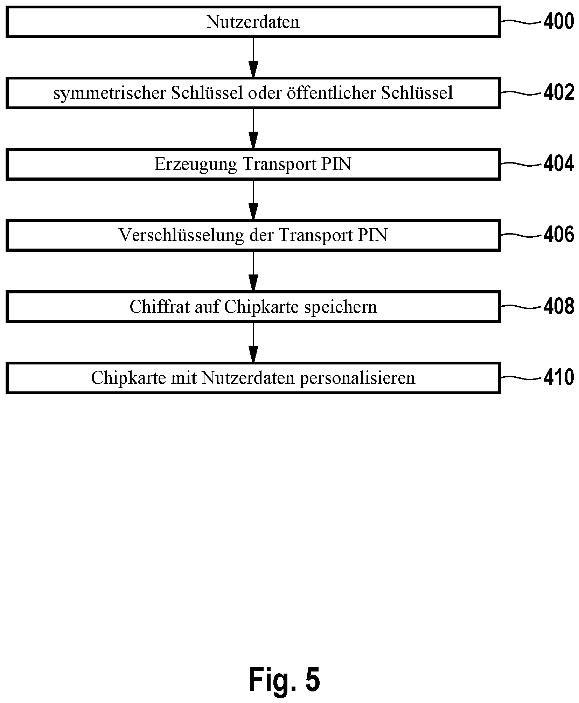

Die Figur 5 zeigt eine Ausführungsform eines erfindungsgemäßen Verfahrens zur Personalisierung einer Chipkarte. In dem Schritt 400 werden Nutzerdaten in das Personalisierungssystem eingegeben. Hierbei kann es sich um persönliche Angaben zu dem Nutzer der zu personalisierenden Chipkarte handeln, wie zum Beispiel dessen Name, Geburtsdatum, Wohnort und dergleichen.

In dem Schritt 402 wird ferner ein Schlüssel in das Personalisierungssystem eingegeben. Hierbei kann es sich um einen symmetrischen Schlüssel handeln, der von dem Nutzer und dem Herausgeber der Chipkarte, der das Personalisierungssystem betreibt, geheim gehalten wird. Der symmetrische Schlüssel kann zum Beispiel auf einem Datenträger, wie zum Beispiel einer weiteren Chipkarte oder einem USB-Stick, oder auf einem Computer des Nutzers gespeichert sein. Statt eines symmetrischen Schlüssels kann in dem Schritt 402 auch ein von dem Nutzer gewähltes Passwort in das Personalisierungssystem eingegeben werden. Auch dieses Passwort wird von dem Nutzer und von dem Herausgeber der Chipkarte geheim gehalten. Das Personalisierungssystem leitet aus dem Passwort mit Hilfe eines definierten Ableitungsverfahrens einen symmetrischen Schlüssel ab. Nach der Personalisierung der Chipkarte kann das Passwort seitens des ZDA gelöscht werden.

Als Alternative zu einem symmetrischen Schlüssel kann in dem Schritt 402 ein öffentlicher Schlüssel oder ein Zertifikat des Nutzers in das Personalisierungssystem eingegeben werden. Hierzu kann beispielsweise mit Hilfe der Nutzerdaten auf einen Verzeichnisserver zugegriffen werden, um von dort den öffentlichen Schlüssel oder das Zertifikat abzufragen.

In dem Schritt 404 wird von dem Personalisierungssystem eine Transport-PIN für die zu personalisierende Chipkarte generiert und in dem Schritt 406 mit dem symmetrischen Schlüssel bzw. dem öffentlichen Schlüssel verschlüsselt. Das aus der Verschlüsselung der Transport-PIN in dem Schritt 406 resultierende Chiffrat wird in dem Schritt 408 auf der Chipkarte gespeichert, und zwar je nach Ausführungsform in deren geschützten Speicherbereich oder in einem Speicherbereich, auf den extern über die Schnittstelle der Chipkarte zugegriffen werden kann.

In dem Schritt 410 wird die Chipkarte mit den in dem Schritt 400 eingegebenen Nutzerdaten personalisiert und anschließend an den Nutzer, zum Beispiel per Post, versendet.

Nach einer Ausführungsform der Erfindung handelt es sich bei dem Herausgeber der Chipkarte, der die Personalisierung durchführt, um einen Zertifizierungs-Dienste-Anbieter (ZDA). Wenn die Verschlüsselung der Transport-PIN mit Hilfe eines von dem Nutzer gewählten Passworts erfolgen soll, so erfolgt die Eingabe in das Personalisierungssystem des ZDA durch den Nutzer so, dass die Eingabe von dem Personal des ZDA nicht beobachtet werden kann. Die Speicherung des Passworts bzw. des daraus abgeleiteten symmetrischen Schlüssels erfolgt in sicheren Systemen des ZDA verschlüsselt oder anderweitig geschützt vor unberechtigtem Zugriff.

Soll die Verschlüsselung der Transport-PIN mit einem asymmetrischen Verschlüsselungsverfahren erfolgen, so kann der Nutzer der zur personalisierenden Chipkarte bei der Antragsstellung für die Beantragung der gewünschten Chipkarte von dem ZDA ein asymmetrisches kryptografisches Schlüsselpaar erhalten, wobei der öffentliche Schlüssel dieses Schlüsselpaars von dem ZDA für die Verschlüsselung der Transport-PIN verwendet wird.

Beispielhafte Ausführungsformen können Folgendes umfassen: Beispielsweise eine Chipkarte mit einem elektronischen Speicher, in dem ein Chiffrat gespeichert ist und in dem eine Transport-PIN gespeichert ist, mit Mittel zur Überführung der Chipkarte von einem Erstbenutzungsstatus in einen Benutzt-Status, wobei die Mittel zur Überführung so ausgebildet sind, dass die Überführung von dem Erstbenutzungsstatus in den Benutzt-Status nur dann erfolgt, wenn das Chiffrat und die Transport-PIN übereinstimmen. Beispielsweise handelt es sich bei dem Chiffrat um die mit einem symmetrischen oder einem asymmetrischen Schlüssel verschlüsselte Transport-PIN. Beispielsweise handelt es sich um eine Chipkarte mit Mitteln zur Übertragung des Chiffrats und Mitteln zum Empfang des entschlüsselten Chiffrats und mit Mitteln zur Prüfung der Übereinstimmung des entschlüsselten Chiffrats mit der Transport-PIN. Beispielsweise handelt es sich um eine Chipkarte mit einer Schnittstelle für eine externe Kommunikation, wobei die Transport-PIN in einem geschützten Speicherbereich gespeichert ist, auf den ein Zugriff über die Schnittstelle nicht möglich ist, und wobei das Chiffrat in einem Speicherbereich gespeichert ist, auf den ein Zugriff über die Schnittstelle möglich ist. Beispielsweise handelt es sich um eine Chipkarte mit Mitteln zum Empfang von Daten, Mitteln zur Entschlüsselung des Chiffrats mit Hilfe der Daten und mit Mitteln zur Prüfung der Übereinstimmung des entschlüsselten Chiffrats mit der Transport-PIN. Beispielsweise handelt es sich um eine Chipkarte mit Mitteln zum Empfang von Daten, Mitteln zur Verschlüsselung der Transport PIN mit Hilfe der Daten und mit Mitteln zur Prüfung der Übereinstimmung des Chiffrats mit der verschlüsselten Transport-PIN. Beispielsweise handelt es sich bei den Daten um einen symmetrischen Schlüssel. Beispielsweise handelt es sich bei den Daten um ein Passwort und mit Mitteln zur Ableitung eines symmetrischen Schlüssels aus dem Passwort. Beispielsweise handelt es sich um eine Chipkarte mit Zählermitteln, wobei die Zählermittel zum Zählen einer Anzahl von Fehleingaben der Daten ausgebildet sind, und mit Mitteln zur Überführung der Chipkarte in einen gesperrten Zustand, wenn eine maximale Anzahl von Fehleingaben erreicht ist. Beispielsweise ist die Überführung in den gesperrten Zustand irreversibel.

Beispielsweise ein Computersystem mit einem Lesegerät zum Zugriff auf eine Chipkarte nach einem der voranstehenden Beispiele. Beispielsweise handelt es sich um ein Computersystem mit Mitteln zum Auslesen des Chiffrats aus der Chipkarte, Mitteln zum Entschlüsseln des Chiffrats und Mitteln zur Übertragung des entschlüsselten Chiffrats an die Chipkarte. Beispielsweise handelt es sich um ein Computersystem mit Eingabemitteln für Daten, wobei die Mittel zur Entschlüsselung so ausgebildet sind, dass die Entschlüsselung des Chiffrats mit Hilfe der Daten erfolgt. Beispielsweise handelt es sich bei den Daten um einen symmetrischen Schlüssel. Beispielsweise handelt es sich bei den Daten um ein Passwort und um ein Computersystem mit Mitteln zur Ableitung eines symmetrischen Schlüssels zur Entschlüsselung des Chiffrats aus dem Passwort. Beispielsweise sind die Mittel zur Entschlüsselung so ausgebildet, dass für die Entschlüsselung des Chiffrats ein privater Schlüssel verwendet wird. Beispielsweise handelt es sich um ein Computersystem mit Mitteln zur Eingabe von Daten und Mitteln zur Übertragung der Daten an die Chipkarte. Beispielsweise handelt es sich bei den Daten um einen symmetrischen Schlüssel oder ein Passwort.

Beispielsweise ein Verfahren zur Aktivierung einer Chipkarte nach einem der voranstehenden Beispiele mit folgenden Schritten: Prüfung des Chiffrats und der Transport-PIN auf Übereinstimmung durch die Chipkarte, Eingabe einer von einem Nutzer gewählten PIN in die Chipkarte, Übergang von einem Erstbenutzungsstatus in einen Benutzt-Status zur Aktivierung der Chipkarte, wenn die Prüfung eine Übereinstimmung zwischen dem Chiffrat und der Transport-PIN ergeben hat. Beispielsweise wird zur Prüfung des Chiffrats und der Transport-PIN auf Übereinstimmung das Chiffrat aus der Chipkarte ausgelesen, das ausgelesene Chiffrat entschlüsselt wird und das entschlüsselte Chiffrat in die Chipkarte eingegeben wird. Beispielsweise prüft die Chipkarte, ob das entschlüsselte Chiffrat und die Transport-PIN identisch sind. Beispielsweise erfolgt die Entschlüsselung des Chiffrats mit Hilfe eines symmetrischen Schlüssels, eines aus einem Passwort abgeleiteten symmetrischen Schlüssels oder mit Hilfe eines privaten Schlüssels. Beispielsweise werden zur Prüfung des Chiffrats und der Transport-PIN auf Übereinstimmung Daten in die Chipkarte eingegeben, mit deren Hilfe das Chiffrat entschlüsselt wird, um es auf Übereinstimmung mit der Transport-PIN zu prüfen. Beispielsweise werden zur Prüfung des Chiffrats und der Transport-PIN auf Übereinstimmung in die Chipkarte Daten eingegeben, mit deren Hilfe die Transport-PIN durch die Chipkarte verschlüsselt wird, um die verschlüsselte Transport-PIN mit dem Chiffrat auf Übereinstimmung zu prüfen. Beispielsweise handelt es sich bei den Daten um einen symmetrischen Schlüssel. Beispielsweise handelt es sich bei den Daten um ein Passwort handelt und wobei durch die Chipkarte wird aus dem Passwort ein symmetrischer Schlüssel abgeleitet.

Beispielsweise ein Computerprogrammprodukt, insbesondere ein digitales Speichermedium, mit ausführbaren Instruktionen zur Durchführung eines Verfahrens nach einem der voranstehenden Beispiele. Beispielsweise ein Verfahren zur Personalisierung einer Chipkarte mit folgenden Schritten: Verschlüsselung einer Transport-PIN mit einem Schlüssel, Speicherung der verschlüsselten Transport-PIN und der unverschlüsselten Transport-PIN in der Chipkarte.

### Bezugszeichenliste

- 100: Chipkarte
- 102: Speicherbereich
- 104: Speicherbereich
- 106: Schnittstelle
- 108: Computer
- 110: Lesegerät
- 112: Prozessor
- 114: Transport-PIN
- 116: Chiffrat
- 118: Register
- 119: Schlüssel
- 120: Programminstruktionen
- 122: Programminstruktionen
- 124: Programminstruktionen
- 126: Schlüssel
- 128: Schlüssel
- 130: Prozessor
- 132: Programminstruktionen
- 134: Tastatur
- 136: Programminstruktionen
- 138: Fehlbedienungszähler

## Patentansprüche

1. Chipkarte mit einem elektronischen Speicher, in dem ein Chiffrat (116) gespeichert ist und in dem eine Transport-PIN (114) gespeichert ist, mit Mittel (122) zur Überführung der Chipkarte von einem Erstbenutzungsstatus in einen Benutzt-Status, wobei die Mittel zur Überführung so ausgebildet sind, dass die Überführung von dem Erstbenutzungsstatus in den Benutzt-Status nur dann erfolgt, wenn das Chiffrat und die Transport-PIN übereinstimmen, wobei das Chiffrat bei der Überführung von dem Erstbenutzungsstatus in den Benutzt-Status durch ein ungültiges Chiffrat ersetzt wird.

2. Chipkarte nach Anspruch 1, wobei es sich bei dem Chiffrat um die mit einem symmetrischen oder einem asymmetrischen Schlüssel verschlüsselte Transport-PIN handelt.

3. Chipkarte nach Anspruch 1 oder 2, mit Mitteln (106) zur Übertragung des Chiffrats und Mitteln (106) zum Empfang des entschlüsselten Chiffrats und mit Mitteln (122) zur Prüfung der Übereinstimmung des entschlüsselten Chiffrats mit der Transport-PIN.

4. Chipkarte nach Anspruch 1, 2 oder 3, mit einer Schnittstelle (106) für eine externe Kommunikation, wobei die Transport-PIN in einem geschützten Speicherbereich (104) gespeichert ist, auf den ein Zugriff über die Schnittstelle nicht möglich ist, und wobei das Chiffrat in einem Speicherbereich (102) gespeichert ist, auf den ein Zugriff über die Schnittstelle möglich ist.

5. Chipkarte nach einem der vorhergehenden Ansprüche, mit Mitteln (106) zum Empfang von Daten, Mitteln (112) zur Entschlüsselung des Chiffrats mit Hilfe der Daten und mit Mitteln (122) zur Prüfung der Übereinstimmung des entschlüsselten Chiffrats mit der Transport-PIN.

6. Chipkarte nach einem der vorhergehenden Ansprüche, mit Mitteln (106) zum Empfang von Daten, Mitteln (112) zur Verschlüsselung der Transport PIN mit Hilfe der Daten und mit Mitteln (122) zur Prüfung der Übereinstimmung des Chiffrats mit der verschlüsselten Transport-PIN.

7. Chipkarte nach Anspruch 5 oder 6, wobei es sich bei den Daten um einen symmetrischen Schlüssel handelt oder
wobei es sich bei den Daten um ein Passwort handelt und mit Mitteln (112) zur Ableitung eines symmetrischen Schlüssels aus dem Passwort.

8. Chipkarte nach einem der Ansprüche 5 bis 7, mit Zählermitteln (138), wobei die Zählermittel zum Zählen einer Anzahl von Fehleingaben der Daten ausgebildet sind, und mit Mitteln (120) zur Überführung der Chipkarte in einen gesperrten Zustand, wenn eine maximale Anzahl von Fehleingaben erreicht ist,
wobei die Überführung in den gesperrten Zustand irreversibel ist.

9. Computersystem mit einem Lesegerät (110) zum Zugriff auf eine Chipkarte (100) nach einem der vorhergehenden Ansprüche.

10. Computersystem nach Anspruch 9, mit Mitteln (130, 132) zum Auslesen des Chiffrats (116) aus der Chipkarte, Mitteln (130, 132) zum Entschlüsseln des Chiffrats und Mitteln (130, 132) zur Übertragung des entschlüsselten Chiffrats an die Chipkarte.

11. Computersystem nach Anspruch 9 oder 10, mit Eingabemitteln (134) für Daten, wobei die Mittel zur Entschlüsselung so ausgebildet sind, dass die Entschlüsselung des Chiffrats mit Hilfe der Daten erfolgt.

12. Computersystem nach einem der vorhergehenden Ansprüche 9 bis 11, wobei die Mittel zur Entschlüsselung so ausgebildet sind, dass für die Entschlüsselung des Chiffrats ein privater Schlüssel verwendet wird.

13. Verfahren zur Aktivierung einer Chipkarte (100) nach einem der vorhergehenden Ansprüche 1 bis 8 mit folgenden Schritten:
- Prüfung des Chiffrats (116) und der Transport-PIN (114) auf Übereinstimmung durch die Chipkarte,
- Eingabe einer von einem Nutzer gewählten PIN in die Chipkarte,
- Übergang von einem Erstbenutzungsstatus in einen Benutzt-Status zur Aktivierung der Chipkarte, wenn die Prüfung eine Übereinstimmung zwischen dem Chiffrat und der Transport-PIN ergeben hat,
- Ersetzen des Chiffrat beim Übergang von dem Erstbenutzungsstatus in den Benutztstatus durch ein ungültiges Chiffrat, und
wobei vorzugsweise zur Prüfung des Chiffrats und der Transport-PIN auf Übereinstimmung das Chiffrat aus der Chipkarte ausgelesen wird, das ausgelesene Chiffrat entschlüsselt wird und das entschlüsselte Chiffrat in die Chipkarte eingegeben wird.

14. Verfahren nach Anspruch 13, wobei das Chiffrat und der Transport-PIN anlässlich einer Personalisierung der Chipkarte in der Chipkarte gespeichert werden, wobei es sich bei dem Chiffrat um die mit einem symmetrischen oder einem asymmetrischen Schlüssel verschlüsselte Transport-PIN handelt.

15. Computerprogrammprodukt, insbesondere digitales Speichermedium, mit ausführbaren Instruktionen zur Durchführung eines Verfahrens nach einem der Patentansprüche 13 bis 14.

## Claims

1. A chip card comprising an electronic memory, in which a ciphertext (116) is stored and in which a transport PIN (114) is stored, comprising means (122) for transferring the chip card from an initial use status into a used status, wherein the means for transfer are designed such that the transfer from the initial use status into the used status only takes place if the ciphertext and the transport PIN agree, wherein the ciphertext is replaced by an invalid ciphertext at the time of transfer from the initial use status into the used status.

2. The chip card according to claim 1, wherein the ciphertext is the transport PIN encrypted with a symmetric or an asymmetric key.

3. The chip card according to claim 1 or 2, comprising means (106) for transferring the ciphertext, and means (106) for receiving the decrypted ciphertext, and comprising means (122) for checking the agreement of the decrypted ciphertext with the transport PIN.

4. The chip card according to claim 1, 2 or 3, comprising an interface (106) for external communication, wherein the transport PIN is stored in a protected memory area (104) that is unable to be accessed via the interface, and wherein the ciphertext is stored in a memory area (102) that is able to be accessed via the interface.

5. The chip card according to one of the preceding claims, comprising means (106) for receiving data, means (112) for decrypting the ciphertext with the aid of the data, and comprising means (122) for checking the agreement of the decrypted ciphertext with the transport PIN.

6. The chip card according to one of the preceding claims, comprising means (106) for receiving data, means (112) for decrypting the transport PIN with the aid of the data, and comprising means (122) for checking the agreement of the ciphertext with the encrypted transport PIN.

7. The chip card according to claim 5 or 6, wherein the data are constituted by a symmetric key, or
wherein the data are constituted by a password, and comprising means (112) for deriving a symmetric key from the password.

8. The chip card according to one of claims 5 to 7, comprising counter means (138), wherein the counter means are designed for counting a number of incorrect inputs of the data, and comprising means (120) for transferring the chip card into a blocked stated if a maximum number of incorrect inputs is reached,
wherein the transfer into the blocked state is irreversible.

9. A computer system with a reader (110) for accessing a chip card (100) according to one of the preceding claims.

10. The computer system according to claim 9, comprising means (130, 132) for reading the ciphertext (116) from the chip card, means (130, 132) for decrypting the ciphertext, and means (130, 132) for transferring the decrypted ciphertext to the chip card.

11. The computer system according to claim 9 or 10, comprising input means (134) for data, wherein the decryption means are designed such that the ciphertext is decrypted with the aid of the data.

12. The computer system according to one of the preceding claims 9 to 11, wherein the decryption means are designed such that a private key is used for the decryption of the ciphertext.

13. A method for activating a chip card (100) according to one of the preceding claims 1 to 8, the method having the following steps:
- checking for agreement between the ciphertext (116) and the transport PIN (114) by the chip card,
- inputting a PIN, selected by a user, into the chip card,
- transferring the chip card from an initial use status into a used status for activation of the chip card if the check has shown agreement between the ciphertext and the transport PIN,
- replacing the ciphertext for an invalid ciphertext at the time of transfer from the initial use status into the used status, and
wherein, to check for agreement between the ciphertext and transport PIN, the ciphertext is preferably read from the chip card, the read ciphertext is decrypted, and the decrypted ciphertext is input into the chip card.

14. The method according to claim 13, wherein the ciphertext and the transport PIN are stored in the chip card as the result of a personalisation of the chip card, wherein the ciphertext is the transport PIN encrypted with a symmetric or an asymmetric key.

15. A computer program product, in particular a digital storage medium, with executable instructions for carrying out a method according to one of claims 13 to 14.

## Revendications

1. Carte à puce pourvue d'une mémoire électronique, dans laquelle un texte chiffré (116) est stocké et dans laquelle un code PIN de transport (114) est stocké, pourvue de moyens (122) permettant le transfert de la carte à puce d'un état de première utilisation dans un état d'utilisation, où les moyens permettant le transfert sont conçus de telle manière que le transfert de l'état de première utilisation dans l'état d'utilisation n'a lieu que si le texte chiffré et le PIN de transport sont concordants, où le texte chiffré est remplacé par un texte chiffré invalide lors du transfert de l'état de première utilisation dans l'état d'utilisation.

2. Carte à puce selon la revendication 1, dans laquelle, dans le cas du texte chiffré, il s'agit d'un PIN de transport chiffré avec une clé symétrique ou asymétrique.

3. Carte à puce selon la revendication 1 ou la revendication 2, pourvue de moyens (106) permettant la transmission du texte chiffré et de moyens (106) permettant la réception du texte chiffré déchiffré et de moyens (122) en vue de la vérification de la concordance du texte chiffré déchiffré et du PIN de transport.

4. Carte à puce selon la revendication 1, la revendication 2 ou la revendication 3, pourvue d'une interface (106) pour une communication externe, où le PIN de transport est stocké dans une zone de mémoire sécurisée (104), à laquelle un accès n'est pas possible par le biais de l'interface, et où le texte chiffré est stocké dans une zone de mémoire (102) à laquelle un accès est possible par le biais de l'interface.

5. Carte à puce selon l'une des revendications précédentes, pourvue de moyens (106) permettant la réception de données, de moyens (112) permettant le déchiffrement du texte chiffré à l'aide des données et pourvue de moyens (122) permettant la vérification de la concordance du texte chiffré déchiffré et du PIN de transport.

6. Carte à puce selon l'une des revendications précédentes, pourvue de moyens (106) permettant la réception de données, de moyens (112) permettant le chiffrement du PIN de transport à l'aide des données et pourvue de moyens (122) permettant la vérification de la concordance du texte chiffré et du PIN de transport chiffré.

7. Carte à puce selon la revendication 5 ou la revendication 6, dans laquelle, dans le cas des données, il s'agit d'une clé symétrique, ou
dans laquelle, dans le cas des données, il s'agit d'un mot de passe, et pourvue de moyens (112) permettant la dérivation d'une clé symétrique à partir du mot de passe.

8. Carte à puce selon l'une des revendications 5 à 7, pourvue de moyens de comptage (138), où les moyens de comptage sont conçus pour le comptage d'un nombre d'entrées incorrectes des données, et pourvue de moyens (120) permettant le transfert de la carte à puce dans un état de blocage lorsqu'un nombre maximal d'entrées incorrectes est atteint,
dans laquelle le transfert dans l'état de blocage est irréversible.

9. Système informatique pourvu d'un lecteur (110) permettant l'accès à une carte à puce (100) selon l'une des revendications précédentes.

10. Système informatique selon la revendication 9, pourvu de moyens (130, 132) permettant la lecture du texte chiffré (116) à partir de la carte à puce, de moyens (130, 132) permettant le déchiffrement du texte chiffré, et de moyens (130, 132) permettant la transmission du texte chiffré déchiffré sur la carte à puce.

11. Système informatique selon la revendication 9 ou la revendication 10, pourvu de moyens d'entrée (134) pour des données, où les moyens permettant le déchiffrement sont conçus de telle manière que le déchiffrement du texte chiffré a lieu à l'aide des données.

12. Système informatique selon l'une des revendications précédentes 9 à 11, dans lequel les moyens permettant le déchiffrement sont conçus de telle manière qu'une clé privée est utilisée pour le déchiffrement du texte chiffré.

13. Procédé d'activation d'une carte à puce (100) selon l'une des revendications précédentes 1 à 8 avec les étapes suivantes :
- vérification, par la carte à puce, du texte chiffré (116) et du PIN de transport (114) en ce qui concerne leur concordance,
- entrée dans la carte à puce d'un code PIN choisi par un utilisateur,
- transfert d'un état de première utilisation dans un état d'utilisation pour l'activation de la carte à puce lorsque la vérification a eu pour résultat une concordance entre le texte chiffré et le PIN de transport,
- remplacement du texte chiffré par un texte chiffré invalide lors du transfert de l'état de première utilisation dans l'état d'utilisation, et
dans lequel, de préférence, pour la vérification du texte chiffré et du PIN de transport en ce qui concerne leur concordance, le texte chiffré est lu à partir de la carte à puce, le texte chiffré lu est déchiffré et le texte chiffré déchiffré est entré dans la carte à puce.

14. Procédé selon la revendication 13, dans lequel le texte chiffré et le PIN de transport sont stockés dans la carte à puce à l'occasion d'une personnalisation de la carte à puce, où, dans le cas du texte chiffré, il s'agit du PIN de transport chiffré avec une clé symétrique ou asymétrique.

15. Produit-programme informatique, notamment support de stockage numérique, avec des instructions exécutables pour la réalisation d'un procédé selon l'une des revendications 13 à 14.
